# EUROPEAN PATENT APPLICATION

(11) **EP 4 568 405 A1**
(43) Date of publication of application: **11.06.2025**
(21) Application number: 23851727.0
(22) Date of filing: 04.08.2023
(51) Int. Cl.: H04W 74/08

(54) **INFORMATION PROCESSING METHOD AND APPARATUS**

(30) Priority: 09.08.2022 CN 202210953024
(71) Applicant: Huawei Technologies Co., Ltd., Shenzhen, Guangdong 518129 (CN)
(72) Inventor: WANG, Fanfan, Shenzhen, Guangdong 518129 (CN); GENG, Tingting, Shenzhen, Guangdong 518129 (CN)
(74) Representative: Maiwald GmbH
(86) International application number: PCT/CN2023/111276
(87) International publication number: WO 2024/032506

(57) **Abstract**

Embodiments of this application provide an information processing method and apparatus. The method includes: A terminal device receives first configuration information from a first network device, where the first configuration information includes a set of random access resources used for a random access feature; when at least one random access feature meets a condition for triggering random access, the terminal device initiates a random access procedure based on the first configuration information; and the terminal device records a first report, where the first report includes first information related to the random access procedure. In this way, after the terminal device reports the first report to a network side, the network side can appropriately adjust, based on the first report, a random access resource configuration corresponding to the random access feature, increasing a success rate of performing random access by the terminal device for the random access feature.

## Description

This application claims priority to Chinese Patent Application No. 202210953024.3, filed with the China National Intellectual Property Administration on August 9, 2022 and entitled "INFORMATION PROCESSING METHOD AND APPARATUS", which is incorporated herein by reference in its entirety.

### TECHNICAL FIELD

Embodiments of this application relate to the field of communication, and more specifically, to an information processing method and apparatus.

### BACKGROUND

A terminal device and a network device can establish a radio link through a random access (random access, RA) procedure, to implement uplink synchronization. After random access succeeds, the terminal device and the network device can perform data transmission.

Usually, the terminal device performs random access based on a random access resource configured by the network device. However, if the random access resource configured by the network device is inappropriate or is not applicable to a communication requirement of the terminal device, random access performed by the terminal device fails.

### SUMMARY

An embodiment of this application provides an information processing method, to increase a success rate of random access performed by a terminal device.

According to a first aspect, an information processing method is provided. The method includes: A terminal device receives first configuration information from a first network device, where the first configuration information includes a set of random access resources used for a random access feature; when at least one random access feature meets a condition for triggering random access, the terminal device initiates a random access procedure based on the first configuration information; and the terminal device records a first report, where the first report includes first information related to the random access procedure.

With reference to the first aspect, in some possible implementations, the random access feature includes: reduced capability terminal device, short packet transmission, coverage enhancement, or network slicing.

With reference to the first aspect, in a possible implementation, the method further includes: The terminal device sends the first report to a second network device. The second network device may be a network device that is the same as or different from the first network device.

According to the technical solution provided in this application, a terminal device determines that at least one random access feature meets a condition for triggering random access, determines a random access resource for the at least one random access feature based on first configuration information, and initiates a random access procedure. The terminal device records a first report, where the first report includes first information related to the random access procedure. In this way, after the terminal device reports the first report to a network side, the network side can appropriately adjust, based on the first report, a random access resource configuration corresponding to the random access feature, increasing a success rate of performing random access by the terminal device for the random access feature.

With reference to the first aspect, in a possible implementation, when the first network device includes a central unit (central unit, CU) and (distributed unit, DU), the following case may exist for that the terminal device receives the first configuration information from the first network device: The terminal device receives first configuration information that is sent by the distributed unit of the first network device, where the first configuration information may be received by the DU from the CU over an F1 interface.

With reference to the first aspect, in some possible implementations, the first configuration information further includes priority information of one or more random access features, and the one or more random access features include the at least one random access feature that meets the trigger condition. For example, the one or more random access features may be all random access features supported by the terminal device.

With reference to the first aspect, in some possible implementations, the terminal device determines, based on the resource set, a random access resource used for some or all random access features of the at least one random access feature; and the terminal device initiates the random access procedure for the some or all random access features.

With reference to the first aspect, in some possible implementations, the first information includes one or more of the following: indication information of the at least one random access feature that triggers the random access procedure, indication information of a random access feature corresponding to an available random access resource that the terminal device selects from the resource set, and the priority information of the at least one random access feature.

According to the foregoing technical solution, the terminal device sends the first report that includes the first information to the first network device, so that the first network device appropriately adjusts resource configurations that correspond to different random access features, increasing a success rate of random access performed by the terminal device.

With reference to the first aspect, in some possible implementations, the terminal device sends first indication information to the second network device, where the first indication information indicates availability of the first report.

According to the foregoing technical solution, when the first indication information is sent, it helps the second network device obtain a status of the first report, so that the second network device can obtain the first report in time.

With reference to the first aspect, in some possible implementations, the terminal device receives a first request from the second network device, where the first request is used to request the first report; and the terminal device sends the first report to the second network device based on the first request.

It should be understood that the second network device may send the first request to the terminal device based on the first indication information from the terminal device, to obtain the first report.

It should also be understood that the terminal device may not need to send the first indication information to the second network device, and the second network device directly sends the first request that is used to obtain the first report to the terminal device.

With reference to the first aspect, in some possible implementations, the terminal device sends first capability information to the first network device, where the first capability information is used for determining whether the terminal device supports recording of the first report, or the first capability information indicates that the terminal device supports recording of the first report.

With reference to the first aspect, in some possible implementations, the terminal device receives second indication information from the first network device, where the second indication information indicates whether the terminal device records a random access report corresponding to one or more random access features, or the second indication information indicates that the terminal device records a random access report corresponding to one or more random access features. In an example, a random access feature corresponding to the first report belongs to the one or more random access features.

The second indication information may indicate whether the terminal device records a corresponding random access report for a specific random access feature or for a plurality of specific random access features. If the second indication information is for a specific random access feature, the terminal device may record a corresponding random access report for a random access procedure related to the random access feature. If a plurality of random access features are specified, the terminal device may record a corresponding random access report for a random access procedure related to any one of the plurality of random access features. Alternatively, the second indication information may indicate whether the terminal device records corresponding random access reports for all random access features.

With reference to the first aspect, in some possible implementations, the terminal device receives third indication information from the first network device, where the third indication information indicates whether the terminal device records the first report, or the third indication information indicates that the terminal device records the first report.

With reference to the first aspect, in some possible implementations, the second indication information or the third indication information includes a first threshold, where the first threshold is a maximum quantity of random access reports recorded by the terminal device.

Based on the foregoing technical solution, when a quantity of random access reports recorded by the terminal device is greater than or equal to the first threshold, the terminal device may stop recording a first report.

With reference to the first aspect, in some possible implementations, the first information further includes one or more of the following information: cell identity information of random access, frequency information of random access, time-frequency domain configuration information, signal quality measurement information, information indicating that signal quality measurement information meets a quality threshold, an amount of data to be transmitted in 2-step random access, configuration information of an uplink data channel in 2-step random access, and information about a beam over which a random access attempt is made.

According to a second aspect, an information processing method is provided. The method includes: A first network device determines first configuration information, where the first configuration information includes a set of random access resources used for a random access feature; and the first network device sends the first configuration information to a terminal device, where the first configuration information is used by the terminal device for initiating a random access procedure.

With reference to the second aspect, in some possible implementations, the first network device receives first indication information from the terminal device, where the first indication information indicates availability of a first report, the first report includes first information, and the first information is related to the random access procedure.

With reference to the second aspect, in some possible implementations, the first information includes one or more of the following: indication information of at least one random access feature that triggers the random access procedure, indication information of a random access feature corresponding to an available random access resource that the terminal device selects from the resource set, and priority information of the at least one random access feature.

With reference to the second aspect, in some possible implementations, the first network device sends first request information to the terminal device, where the first request information is used to obtain the first report; and the first network device receives the first report from the terminal device.

With reference to the second aspect, in some possible implementations, the first network device receives first capability information from the terminal device, where the first capability information is used for determining whether the terminal device supports recording of the first report, or the first capability information is used for determining that the terminal device supports recording of the first report.

With reference to the second aspect, in some possible implementations, the first network device sends second indication information to the terminal device, where the second indication information indicates whether the terminal device records a random access report corresponding to one or more random access features, or the second indication information indicates that the terminal device records a random access report corresponding to one or more random access features.

With reference to the second aspect, in some possible implementations, the first network device sends third indication information to the terminal device, where the third indication information indicates whether the terminal device records the first report, or the third indication information indicates that the terminal device records the first report.

With reference to the second aspect, in some possible implementations, the second indication information or the third indication information includes a first threshold, where the first threshold is a maximum quantity of random access reports recorded by the terminal device.

With reference to the second aspect, in some possible implementations, the first information further includes one or more of the following: cell identity information of random access, frequency information of random access, time-frequency domain configuration information, signal quality measurement information, information indicating that signal quality measurement information meets a quality threshold, an amount of data to be transmitted in 2 -step random access, configuration information of an uplink data channel in 2-step random access, and information about a beam over which a random access attempt is made.

According to a third aspect, an information processing method is provided. The method includes: A first central unit receives first information from a second central unit, where the first information includes a random access feature resource set and/or random access feature priority information that are/is of the second CU; and the first CU determines random access resource configuration conflict information based on the first information and second information, where the first CU belongs to a first network device, the second CU belongs to a second network device that is adjacent to the first network device, and the second information includes a random access feature resource set and/or random access feature priority information that are/is of the first CU.

According to the foregoing technical solution, CUs identify a configuration conflict through exchange of information, and determine a possible solution to the configuration conflict, reducing random access feature configuration conflicts between cells, increasing a success rate of performing a random access procedure by a terminal device, and improving quality of communication.

With reference to the third aspect, in some possible implementations, the random access resource configuration conflict information includes one or more of the following: a conflict between legacy random access configurations, a conflict between random access feature resource set configurations, and a conflict between a legacy random access configuration and a random access feature resource set configuration.

With reference to the third aspect, in some possible implementations, the first CU sends the random access resource configuration conflict information to a first DU, where the first CU and the first DU belong to a same network device.

With reference to the third aspect, in some possible implementations, the first CU receives third information from the first DU, where the third information includes adjusted random access feature resource set configuration information and/or adjusted random access feature priority information.

According to a fourth aspect, an information processing method is provided. The method includes: A first DU receives random access resource configuration conflict information from a first central unit CU, where the random access resource configuration conflict information is determined based on first information and second information, the first information includes random access feature resource set configuration information and/or random access feature priority information that are/is of a second CU, and the second information includes random access feature resource set configuration information and/or random access feature priority information that are/is of the first CU; and the first DU sends third information to the first CU, where the third information is determined based on the random access resource configuration conflict information.

With reference to the fourth aspect, in some possible implementations, the random access resource configuration conflict information includes one or more of the following: a conflict between legacy random access configurations, a conflict between random access feature resource set configurations, and a conflict between a legacy random access configuration and a random access feature resource set configuration.

With reference to the fourth aspect, in some possible implementations, the third information includes adjusted random access feature resource set configuration information and/or adjusted random access feature priority information.

According to a fifth aspect, an information processing apparatus is provided. The apparatus includes units or modules that are configured to perform the method according to any one of the first aspect to the fourth aspect and the possible implementations of the first aspect to the fourth aspect, for example, a processing unit and/or a communication unit.

For example, the communication unit is configured to receive first configuration information from a first network device, where the first configuration information includes a set of random access resources used for a random access feature. When at least one random access feature meets a condition for triggering random access, the processing unit is configured to initiate a random access procedure based on the first configuration information. The processing unit is further configured to record a first report, where the first report includes first information related to the random access procedure.

For another example, the processing unit is configured to determine first configuration information, where the first configuration information includes a set of random access resources used for a random access feature. The communication unit is configured to send the first configuration information to a terminal device, where the first configuration information is used by the terminal device for initiating a random access procedure.

In an implementation, the apparatus is a communication device. When the apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device. When the apparatus is a chip, a chip system, or a circuit used in a communication device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a sixth aspect, an information processing apparatus is provided. The apparatus includes at least one processor, configured to execute a computer program or instructions stored in a memory, to perform the method according to any one of the possible implementations in the first aspect to the fourth aspect. Optionally, the apparatus further includes a memory, configured to store a computer program or instructions. Optionally, the apparatus further includes a communication interface. The processor reads, through the communication interface, the computer program or instructions stored in the memory.

In an implementation, the apparatus is a communication device.

In another implementation, the apparatus is a chip, a chip system, or a circuit used in a device.

According to a seventh aspect, this application provides a processor. The processor is configured to perform the methods provided in the foregoing aspects.

Operations such as sending and obtaining/receiving related to the processor may be understood as operations such as outputting and receiving or inputting performed by the processor, or operations such as sending and receiving performed by a radio frequency circuit and an antenna, unless otherwise specified, or provided that the operations do not contradict actual functions or internal logic of the operations in related descriptions. This is not limited in this application.

According to an eighth aspect, a computer-readable storage medium is provided. The computer-readable medium stores program code to be executed by a device. The program code is used to execute the method according to any one of the possible implementations in the first aspect to the fourth aspect.

According to a ninth aspect, a computer program product including instructions is provided. When the computer program product is run on a computer, the computer is enabled to perform the method according to any one of the possible implementations in the first aspect to the fourth aspect.

According to a tenth aspect, a communication system is provided. The communication system includes one or more of the terminal device, the first network device, or the second network device.

According to an eleventh aspect, a communication device is provided, including a first apparatus and a second apparatus. The first apparatus is configured to perform the method according to the third aspect or the method according to the fourth aspect. For example, the first apparatus is a CU, and the second apparatus is a DU.

### BRIEF DESCRIPTION OF DRAWINGS

FIG. 1 is a diagram of a protocol stack and network element modules of an access network device according to this application;
FIG. 2 is a schematic flowchart of 4-step CBRA according to an embodiment of this application;
FIG. 3 is a schematic flowchart of 2-step CBRA according to an embodiment of this application;
FIG. 4 is a schematic flowchart of reporting a terminal device capability according to an embodiment of this application;
FIG. 5 is a schematic flowchart of an information processing method according to an embodiment of this application;
FIG. 6 is a schematic flowchart of another information processing method according to an embodiment of this application;
FIG. 7 is a schematic flowchart of another information processing method according to an embodiment of this application;
FIG. 8 is a schematic flowchart of another information processing method according to an embodiment of this application;
FIG. 9 is a block diagram of an information processing apparatus according to an embodiment of this application; and
FIG. 10 is a block diagram of another information processing apparatus according to an embodiment of this application.

### DESCRIPTION OF EMBODIMENTS

The following describes technical solutions in embodiments of this application with reference to the accompanying drawings.

The technical solutions in embodiments of this application may be used in various communication systems, for example, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunication System, UMTS), a worldwide interoperability for microwave access (Worldwide Interoperability for Microwave Access, WiMAX) communication system, a 5th generation (5th Generation, 5G) system such as a new radio (New Radio, NR) system, a non-terrestrial network (non-terrestrial network, NTN), another next generation (next generation, NG) communication system, or a novel communication system.

A terminal device in embodiments of this application may be user equipment (user equipment, UE), an access terminal, a subscriber unit, a subscriber station, a mobile station (mobile station, MS), a mobile console, a remote station, a remote terminal, a mobile device, a user terminal, a terminal, a wireless communication device, a user agent, or a user apparatus. Alternatively, the terminal device may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device or computing device with a wireless communication function, another processing device, vehicle-mounted device, or wearable device connected to a wireless modem, a terminal device in a future 5G network, a terminal device in a future evolved public land mobile network (Public Land Mobile Network, PLMN), or the like. Currently, some examples of the terminal device are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. The terminal device may have a plurality of subscriber identification modules (subscriber identification modules, SIMs). This is not limited in embodiments of this application.

In this application, a network device may be an access network device configured to communicate with a terminal device. Access network devices may be various types of base stations, for example, a base transceiver station (Base Transceiver Station, BTS) in a global system for mobile communications (Global System for Mobile communications, GSM) or in a code division multiple access (Code Division Multiple Access, CDMA) system, a NodeB (NodeB, NB) in a wideband code division multiple access (Wideband Code Division Multiple Access, WCDMA) system, a next generation NodeB (next generation NodeB, gNB) in a 5G mobile communication system, a next generation base station in a 6th generation (6th generation, 6G) mobile communication system, or a base station in another future-oriented mobile communication system. Alternatively, an access network device may be a device such as an access point (access point, AP) in a wireless fidelity (wireless fidelity, Wi-Fi) system, a radio relay node, or a radio backhaul node. Alternatively, an access network device may be a module or unit that performs some of functions of a base station, for example, a central unit (central unit, CU) or a distributed unit (distributed unit, DU). The base station in this application may be a macro base station, a micro base station, an indoor station, or the like. A specific technology and a specific device form that are used by the network device are not limited in embodiments of this application.

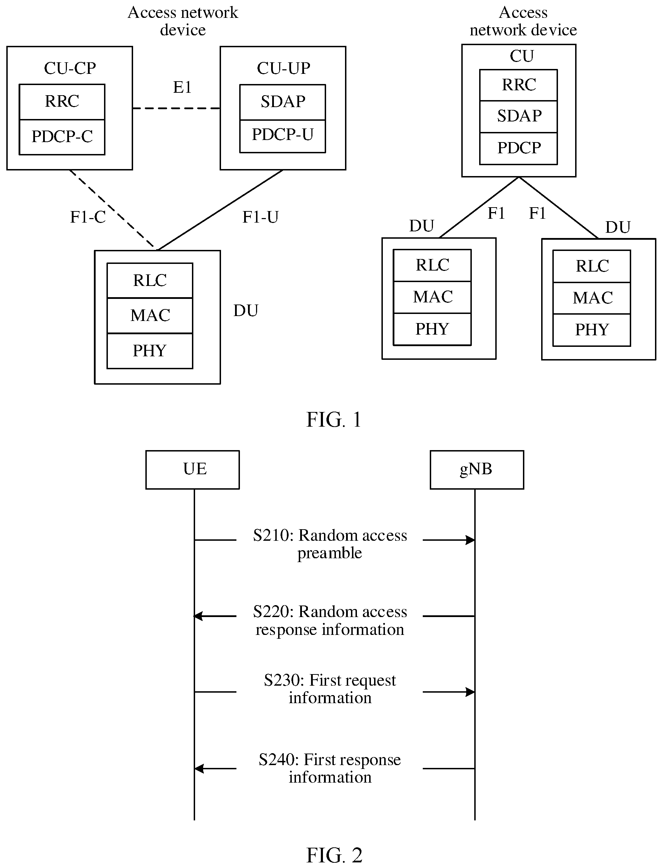

FIG. 1 is a diagram of a protocol stack and network element modules of an access network device according to this application.

In a network structure, an access network device may include a central unit (central unit, CU) node, a distributed unit (distributed unit, DU) node, or a RAN device including a CU node and a DU node. A RAN device including a CU node and a DU node splits protocol layers of a gNB in an NR system. Functions of some of the protocol layers are centrally controlled in the CU, and functions of some or all of remaining protocol layers are distributed in the DU. The CU centrally controls the DU.

As shown in FIG. 1, a radio resource control (radio Resource Control, RRC) layer, a PDCP layer, and a service data adaptation protocol (service data adaptation protocol, SDAP) layer in the protocol stack are deployed in a CU; and a radio link control (radio link control, RLC) layer, a media access control (media access control, MAC) layer, and a physical layer (physical layer, PHY) in the protocol stack are deployed in a DU.

The CU has RRC, PDCP, and SDAP processing capabilities, and the DU has RLC, MAC, and PHY processing capabilities.

It should be understood that the foregoing splitting (or division) of functions is merely an example, and does not constitute a limitation on the CU and DU in this application. In other words, alternatively, the functions may be divided between the CU and the DU in another manner. This is not limited in this embodiment of this application.

Functions of the CU may be implemented by one entity or different entities. For example, the functions of the CU may be further divided. For example, a control plane (CP) and a user plane (UP) are separated, that is, a CU control plane (CU-CP) and a CU user plane (CU-UP) are separated. The CU-CP and the CU-UP may be implemented by different functional entities. The CU-CP and the CU-UP may be coupled to the DU to jointly implement functions of a network device. The CU-CP, the control plane of the CU, may further be of an architecture in which the CU-CP is further divided. To be specific, the CU-CP is further divided into a CU-CP1 and a CU-CP2. The CU-CP1 provides various radio resource management functions, and the CU-CP2 provides only an RRC function and a PDCP-C function (that is, a basic function of control plane signaling at the PDCP layer).

In a possible manner, the CU-CP is responsible for control plane functions, which mainly include RRC and PDCP-C. The PDCP-C is mainly responsible for data encryption and decryption, integrity protection, data transmission, and the like on the control plane. The CU-UP is responsible for user plane functions, which mainly include SDAP and PDCP-U. The SDAP is mainly responsible for processing data from a core network and mapping data flows (flow) to bearers. The PDCP-U is mainly responsible for encryption and decryption, integrity protection, header compression, sequence number maintenance, data transmission, and the like on the data plane. The CU-CP and the CU-UP are connected by an E1 interface. The CU-CP represents a gNB and is connected to the core network by an Ng interface. The CU-CP is connected to the DU by F1-C (control plane). The CU-UP is connected to the DU by F1-U (user plane). Certainly, in another possible implementation, the PDCP-C is also in the CU-UP.

For ease of understanding the technical solutions in embodiments of this application, the following briefly describes basic concepts used in embodiments of this application.

### 1. Random access (random access, RA)

A terminal device and a network device establish a radio link through an RA procedure, to implement uplink synchronization. After RA succeeds, the terminal device and the network device perform normal data transmission.

RA includes 4-step contention based random access (4-step contention based random access, 4-step CBRA), 4-step contention free random access (4-step contention free random access, 4-step CFRA), 2-step contention based random access (2-step contention based random access, 2-step CBRA), and 2-step contention free random access (2-step contention free random access, 2-step CFRA). The following specifically describes procedures of 4-step CBRA and 2-step CBRA.

FIG. 2 is a schematic flowchart of 4-step CBRA according to an embodiment of this application. For ease of understanding, an example is used, in which a terminal device is UE and a network device is a gNB. As shown in FIG. 2, the following steps are included.

S210: The UE sends a random access preamble (preamble) to the gNB.

Specifically, the UE sends the preamble (preamble) to the gNB on a physical random access channel (physical random access channel, PRACH) resource, for example, a random access channel occasion (RACH Occasion).

S220: The gNB sends random access response information to the UE.

Specifically, after receiving the preamble from the UE, the gNB sends the random access response (random access response, RAR) information to the UE. The RAR may indicate a resource location of a physical uplink shared channel (physical uplink shared channel, PUSCH).

S230: The UE sends first request information to the gNB.

Specifically, the UE sends the first request information to the gNB on the PUSCH based on the resource location of the PUSCH indicated in the random access response information received from the gNB.

Optionally, the first request information includes an RRC setup request (RRC Setup Request) message or an RRC resume request (RRC Resume Request) message.

S240: The gNB sends first response information to the UE.

Specifically, after receiving the first request information from the UE, the gNB sends the first response information to the UE.

Optionally, the first response information includes one or more of the following: an RRC setup (RRC Setup) message, an RRC resume (RRC Resume) message, an acknowledgement (acknowledgement, ACK)/a negative acknowledgement (negative acknowledgement, NACK) of the physical uplink shared channel (physical uplink shared channel, PUSCH) in the first request information, a power control command, or the like.

FIG. 2 mainly describes a specific procedure of information exchange between the UE and the gNB in 4-step contention based random access (4-step CBRA).

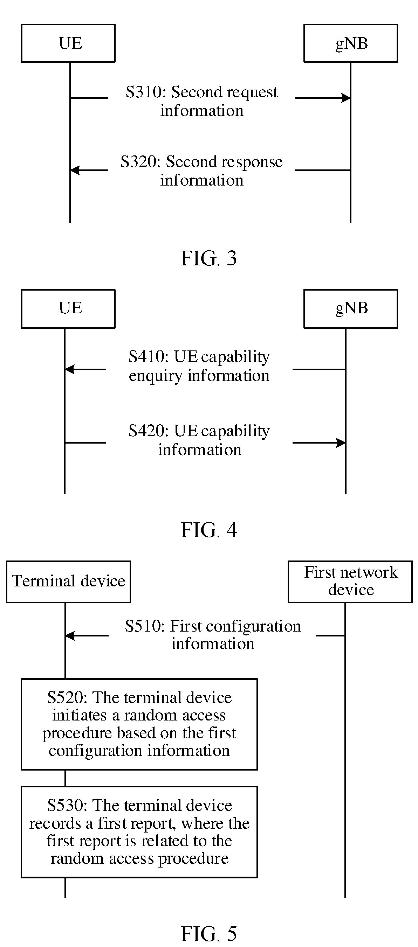

FIG. 3 is a schematic flowchart of 2-step CBRA according to an embodiment of this application. For ease of understanding, an example is used, in which a terminal device is UE and a network device is a gNB. As shown in FIG. 3, the following steps are included.

S310: The UE sends second request information to the gNB.

Specifically, the UE sends the second request information to the gNB on a PRACH resource, and sends uplink data to the gNB on a PUSCH.

Optionally, the second request information includes a preamble, an RRC setup request (RRC Setup Request) message, or an RRC resume request (RRC Resume Request) message.

S320: The gNB sends second response information to the UE.

Specifically, after receiving the second request information from the UE, the gNB sends the second response information to the UE.

Optionally, the second response information includes one or more of the following: an RRC setup (RRC Setup) message, an RRC resume (RRC Resume) message, an acknowledgement ACK/a NACK of the PUSCH in the second request information, a power control command, or the like.

FIG. 3 mainly describes a specific procedure of information exchange between the UE and the gNB in 2-step contention based random access (2-step CBRA).

### 2. Random access report

To avoid a random access procedure failure (that is, a RACH failure) that results from inappropriate configuration performed by a network device, a terminal device records information about a RACH procedure and generates a corresponding random access report (which may also be referred to as a RACH report). A RACH report includes parameters that are related to a random access procedure performed by the terminal device and that are recorded by the terminal device, such as cell identity information of random access, frequency information of random access, time-frequency domain configuration information, signal quality measurement information, information indicating that signal quality measurement information meets a quality threshold, an amount of data to be transmitted in 2-step random access, configuration information of an uplink data channel in 2-step random access, and information about a beam over which a random access attempt is made. It can be understood that a name of the RACH report or the random access report is merely an example, and the report may have another name. This is not limited.

After the terminal device accesses the network device, the network device may request or query the RACH report from the terminal device by using a request/response (UE Information Request/Response) procedure of the terminal device. The terminal device sends the RACH report to the network device, so that the network device identifies a problem that exists in the RACH procedure, and optimizes a RACH resource configuration in time. In this way, a success rate of RACH performed by the terminal device is increased.

### 3. Terminal device capability information

Terminal device capability (which may also be referred to as UE Capability) information includes two parts: a terminal device's radio access network-based capability (UE Radio Capability) information and the terminal device's core network-based capability (UE Core Network Capability) information.

It should be understood that the UE radio capability information is not equal to the UE capability information. The UE radio capability information is of interest to an access network, and the UE core network capability information is of interest to a core network.

As shown in FIG. 4, a procedure for transferring a terminal device capability is described by using an example in which a terminal device is UE and a network device is a gNB. The procedure is initiated by a network device to a terminal device that is in connected mode. Terminal device capability enquiry information (for example, UE capability enquiry) and terminal device capability information (for example, UE capability information) are included. The procedure is used to transfer information about the terminal device's radio access network-based capability (UE Radio Capability information) to the network device.

The information about the terminal device's core network-based capability (UE Core Network Capability information) may be transferred by a non-access stratum (non-access stratum, NAS) in an EPS mobility management (EPS mobility management, EMM) procedure such as an attaching (attach) procedure or a tracking area updating (tracking area updating, TAU) procedure.

It should also be understood that, when making various event decisions or performing various algorithms, a network device can make an appropriate decision when taking terminal device capabilities into account. For reporting and synchronization of terminal device capabilities, a terminal device proactively reports its capabilities when performing a first EPS mobility management procedure such as attaching or TAU, where the procedure belongs to a NAS procedure. In an RRC specification, a wireless side also performs a terminal device capability enquiry procedure, to obtain and transfer terminal device capabilities.

### 4. Physical random access channel (PRACH) resource

Different random access features are allocated different PRACH resources. The random access features include, for example, the following several categories.
(1) Reduced capability terminal device (reduced capability UE, RedCap UE): RedCap UE is a terminal device whose capabilities are reduced. That capabilities are reduced may mean that a bandwidth supported by a terminal device is reduced, a quantity of antennas of a terminal device is reduced, or the like. Because RedCap UE supports a lower bandwidth than a conventional terminal device, when a terminal device sends a random access preamble to a network device, the network device recognizes RedCap UE in advance, so that the network device can allocate an appropriate bandwidth to the RedCap UE in a subsequent RACH procedure, where the bandwidth is not allowed to exceed a maximum bandwidth supported by the RedCap UE. For example, an uplink resource scheduled in a random access response (random access response, RAR) for first request information from the terminal device (for example, step S230 shown in FIG. 2) does not exceed the maximum bandwidth supported by the RedCap UE, and is appropriately configured for the RedCap UE in first response information sent by the network device to the terminal device (for example, step S240 shown in FIG. 2).
   It should be noted that RedCap UE is actually a type of terminal device, but is uniformly described by a term "feature" in this application.
(2) Short packet transmission (small data transmission, SDT): SDT means short packet transmission or is referred to as small data transmission or small packet transmission. A terminal device in an inactive state may perform RACH-based short packet transmission. For example, a terminal device also sends short-packet data when sending first request information to a network device (for example, step S230 shown in FIG. 2). In this case, the terminal device can transmit cell data before entering a connected mode, reducing power consumption. Therefore, the terminal device reports, when sending a random access preamble to the network device (for example, step S210 shown in FIG. 2), that the terminal device requests short-packet data transmission, so that the network device can schedule a large transmission resource for the first request information for the terminal device in RAR.
(3) Coverage enhancement (coverage enhancement, CovEnh): Coverage enhancement addresses how to improve coverage performance that corresponds to a case in which a terminal device sends first request information to a network device (for example, step S230 shown in FIG. 2). To be specific, the terminal device may report, when sending a random access preamble to the network device, that the terminal device performs coverage enhancement, so that the network device can schedule the terminal device to repeatedly (repetition) send the first request information (for example, step S230 shown in FIG. 2). In this way, RACH coverage is enhanced, and utilization of resources is increased.
(4) Network slicing (RAN slicing): For network slicing, considering that some services or terminal devices have a high priority, a network device may provide dedicated RACH resources for the services or terminal devices. In this way, a priority of network slicing supported by the network device is determined, and RACH resources are isolated.

It should be understood that in addition to the four random features, a network needs to configure a dedicated RACH resource for a RACH feature combination that includes a plurality of RACH features. For example, in a case in which the feature RedCap UE triggers random access-based short packet transmission, when a network device recognizes from random access preamble information sent by a terminal device that the terminal device is RedCap UE, the network device performs special processing for the RedCap UE in a subsequent RACH procedure, and when the network device further recognizes from the random access preamble information that the terminal device requests SDT transmission, the network device considers short-packet data transmission when configuring a resource for first request information for the terminal device. To be specific, in this case, the network device configures a separate RACH resource for a scenario in which RedCap UE triggers RACH-based short packet transmission. RACH feature information of the terminal device may be expressed as a feature combination RedCap + SDT.

It should also be understood that based on the four RACH features described above, 11 possibilities shown in Table 1 may be included when a plurality of RACH features are combined.

**Table 1**

| | | | | | | | | | | |
|---|---|---|---|---|---|---|---|---|---|---|
| 1 SDT + RedCap | 2 RedCap + CovEnh | 3 CovEnh + slicing | 4 SDT + slicing | 5 SDT + CovEnh | 6 RedCap + slicing | 7 SDT + RedCap + CovEnh | 8 SDT + RedCap + slicing | 9 SDT + CovEnh + slicing | 10 RedCap + CovEnh + slicing | 11 SDT + REdCap + CovEnh + slicing |

Therefore, a network device can configure separate RACH resources not only for the four single RACH features but also for the RACH feature combinations.

Besides, combinations of 2-step RACH or 4-step RACH and the RACH features or the RACH feature combinations may be considered. For example, a network device configures a separate 2-step RACH resource for RedCap UE.

In the future, there may also be one or more other RACH features, to which the methods provided in embodiments of this application are also applicable. A specific type of a RACH feature is not limited in this application.

According to the foregoing descriptions, in configuration information in a network device, the network device may configure dedicated RACH resources for all RACH features or all RACH feature combinations, or may configure dedicated RACH resources only for some features or some feature combinations.

For example, a feature combination triggering a RACH procedure is RedCap + CovEnh + RAN slicing, but a network configures dedicated resources only for RACH feature combinations RedCap + slicing and RedCap + CovEnh. In this case, a specific feature for which a terminal device selects a dedicated resource depends on priorities of RACH features (or an order of the RACH features) according to which the terminal device selects a RACH resource.

The network device may broadcast RACH features by using a system information block1 (system information block1, SIB1), for example, broadcast priorities of RACH features RedCap and RAN Slicing. A smaller value indicates a higher priority. The network device does not configure a same priority for a plurality of RACH features. The terminal device selects a RACH resource set (RACH partition resource) based on the priorities of the RACH features.

For example, a RACH procedure is triggered by a feature combination RedCap + SDT + CovEnh. In other words, a feature combination used in the RACH procedure is RedCap + SDT + CovEnh. Feature priorities broadcast by a network are as follows: RedCap > Slice group1 > SDT > CovEnh. The network configures RACH partition resources for the following feature combinations: RedCap + SDT, RedCap, RedCap + CovEnh, SDT + CovEnh, and slice group1 + SDT. Details are shown in Table 2.

**Table 2**

| Feature combination used in the RACH procedure | RACH feature combinations in a RACH resource set configured by the network |
|---|---|
| RedCap + SDT + CovEnh | RedCap + SDT, RedCap, RedCap + CovEnh, SDT + CovEnh, and slice group1 + SDT |

Specifically, when selecting a RACH resource, a terminal device first selects a dedicated resource of a RACH feature with a high priority or a RACH feature combination related to the RACH feature (for example, the feature RedCap or a RedCap-related feature combination). If determined dedicated resources related to RACH feature combinations do not include a dedicated resource of a RedCap-related feature combination, the terminal device selects a dedicated resource of the feature SDT with a lower priority than RedCap or an SDT-related feature combination (if any) for the RACH procedure.

It can be determined, based on the feature combinations for which the network device configures the set of random access resources (set of random access resources, RACH partition) in Table 1, that RACH resources applicable to the feature RedCap are as follows: RedCap + SDT, RedCap, and RedCap + CovEnh.

If the dedicated resources related to the RedCap-related feature combinations include a dedicated resource of an SDT-related feature combination, the terminal device continues to determine dedicated resources for feature combinations related to RedCap and SDT. If the determined dedicated resources do not include a dedicated resource of an SDT-related feature combination, the terminal device selects the dedicated resource of the feature combination RedCap + CovEnh.

If determined dedicated resources of feature combinations related to RedCap and SDT include a dedicated resource of a CovEnh-related feature combination, the terminal device selects a dedicated resource of the feature combination RedCap + SDT + CovEnh. If determined dedicated resources of feature combinations related to RedCap and SDT do not include a dedicated resource of a CovEnh-related feature combination, the terminal device selects any available dedicated resource that includes a feature combination related to RedCap and SDT.

It should be noted that there are also 2-step RA and 4-step RA for single RACH features and RACH feature combinations, and an RA resource selection mechanism (for example, NUL/SUL carrier selection, SSB selection, or preamble selection) used when a RACH procedure is triggered and fallback and abort mechanisms in a RACH procedure are similar to those used in legacy random access (legacy RACH). Details are not described herein.

When a RACH procedure of a terminal device is triggered by one or more RACH features, the terminal device selects a RACH resource based on a random access resource set and RACH feature priority information that are configured by a network device, which is different from legacy RACH. However, this may result in inappropriate resource allocation for the random access resource set configured by the network device (for example, a corresponding resource is not configured for a RACH feature combination that occurs at a high frequency). Consequently, an optimal matching dedicated resource cannot be selected for a RACH feature or RACH feature combination used by the terminal device.

To resolve the foregoing technical problem, this application provides an information processing method. FIG. 5 is a schematic flowchart of an information processing method according to an embodiment of this application. As shown in FIG. 5, the method includes the following steps.

S510: A terminal device receives first configuration information from a first network device.

Correspondingly, the first network device sends the first configuration information to the terminal device.

The first configuration information includes a set of random access resources, which is referred to as a RACH resource set in this embodiment of this application. For detailed descriptions, refer to the descriptions in Table 1. The terminal device may determine, based on indication information of one or more random access features corresponding to each random access resource in the RACH resource set, one or more RACH features to which the random access resource is applicable. For descriptions of the RACH features, refer to the foregoing related content.

Optionally, the first configuration information further includes RACH feature priority information.

S520: The terminal device initiates a random access procedure based on the first configuration information.

Specifically, after the terminal device receives the first configuration information from the first network device, when at least one of the one or more RACH features meets a condition for triggering random access, the terminal device selects a random access resource based on the RACH resource set and RACH feature priorities that are in the first configuration information, to initiate the random access procedure. The at least one RACH feature that meets the trigger condition may include a single RACH feature or a RACH feature combination (for example, SDT + RedCap). This is not limited in this application.

A procedure of determining a RACH feature that can initiate or perform a random access procedure is, for example, as follows: The terminal device determines one or more RACH features for which random access is to be performed, selects a RACH resource from the RACH resource set, and determines whether the selected RACH resource is applicable for initiating a random access procedure for all or some of the one or more RACH features. If the RACH resource selected by the terminal device supports a RACH feature #0, it is determined that the RACH feature #0 can initiate the random access procedure; or if the RACH resource selected by the terminal device does not support the RACH feature #0, it is determined that the RACH feature #0 cannot initiate the random access procedure.

For example, when the terminal device determines that at least one of the one or more RACH features meets the condition for triggering random access, the terminal device determines, based on the RACH resource set used for a RACH feature in the first configuration information sent by the first network device, all or some of the RACH features that can initiate a random access procedure. For example, when the terminal device determines that one or more RACH features that trigger random access include RedCap, SDT + RedCap, CovEnh + RedCap, SDT + CovEnh, and CovEnh + slicing, the terminal device may initiate the random access procedure for any one or more of the RACH features. This is not limited in this application. For example, when RedCap meets the condition for triggering random access, the terminal device selects, from the first configuration information, a random access resource that can be used for RedCap, to initiate a random access procedure. For specific descriptions of random access, refer to the detailed descriptions in FIG. 2 and FIG. 3.

It can be understood that, when a plurality of RACH features meet the trigger condition, a random access procedure that the terminal device initiates may be related to some or all of the RACH features. In other words, RACH features that initiate a RACH procedure may be some of a plurality of RACH features that meet the trigger condition. For example, the terminal device may determine, based on the first configuration information, whether there is a RACH resource that is in the RACH resource set and that can be used for the RACH features. If there is only a RACH resource that can be used for some of the RACH features, even if another RACH feature meets the trigger condition, the terminal device does not initiate a RACH procedure for the another RACH feature.

The first configuration information may further include priority information of one or more RACH features. When initiating the random access procedure for the at least one RACH feature that meets the trigger condition, the terminal device may further consider the RACH feature priority information.

In an implementation, the terminal device may determine, based on the RACH resource set and the RACH feature priorities that are in the first configuration information, a random access resource used for some or all of the at least one RACH feature, and initiates a random access procedure for the some or all RACH features. The first configuration information sent by the network device may include dedicated RACH resources configured for all single RACH features or all RACH feature combinations, or may include dedicated RACH resources configured for some or specific single RACH features or some or specific RACH feature combinations. For example, the network device configures dedicated RACH resources only for RedCap, SDT + RedCap, SDT + RedCap, SDT + CovEnh, and CovEnh + slicing. In this case, the first configuration information that the terminal device receives from the first network device includes a RACH resource set and RACH feature priorities, with the RACH resource set including the dedicated RACH resources that are for RedCap, SDT + RedCap, SDT + RedCap, SDT + CovEnh, and CovEnh + slicing. For the RACH feature priority information (for example, the RACH feature priorities configured by the network device are as follows: RedCap > Slice group1 > SDT > CovEnh).

For example, when the feature RedCap and the feature combination SDT + RedCap meet the condition for triggering random access, and the terminal device determines, based on the RACH resource set in the first configuration information, random access resources that can be used for the feature RedCap and SDT + RedCap, the terminal device may initiate a random access procedure for the feature RedCap and the feature combination SDT + RedCap.

For another example, when a RACH feature or a feature combination such as SDT + CovEnh + slicing meets the condition for triggering random access, but the terminal device cannot find, in the RACH resource set in the first configuration information, a random access resource corresponding to SDT + CovEnh + slicing, the terminal device considers the random access feature priorities, selects the random access resource corresponding to CovEnh + slicing from the RACH resource set, and initiates a random access procedure for the feature combination CovEnh + slicing.

For another example, when the terminal device determines, based on the RACH resource set in the first configuration information, that RACH features to which resources are applicable include RedCap, SDT + RedCap, SDT + RedCap, SDT + CovEnh, and CovEnh + slicing, but none of the RACH features triggers random access, the terminal device does not initiate a random access procedure.

S530: The terminal device records a first report.

Specifically, when the terminal device initiates a random access procedure based on the first configuration information, the terminal device records a first report. The first report includes first information that is related to the random access procedure initiated by the terminal device in S520.

For example, the first report is a RACH report related to the at least one RACH feature.

It should be understood that the first report may be recorded by the terminal device for one or more RACH features, or the first report may be recorded by the terminal device for all the RACH features in the first configuration information. This is not limited in this application.

Optionally, the first information includes one or more of the following: indication information of the at least one RACH feature that triggers the random access procedure, indication information of a RACH feature corresponding to an available random access resource that the terminal device selects from the resource set, and the priority information of the at least one RACH feature.

For example, RedCap triggers random access, and the terminal device determines, based on the first configuration information, that one or more RACH features to which resources in the random access resource set are applicable include RedCap, SDT + RedCap, SDT + RedCap, SDT + CovEnh, and CovEnh + slicing. The terminal selects the random access resource that indicates RedCap, initiates a random access procedure for the feature RedCap, and records a first report. The first report includes indication information of the feature RedCap that triggers the random access procedure, and indication information of the feature RedCap corresponding to the selected random access resource.

For another example, SDT + RedCap triggers random access, and the terminal device determines, based on the first configuration information, that one or more RACH features to which resources in the random access resource set are applicable include RedCap, SDT + RedCap, SDT + RedCap, SDT + CovEnh, and CovEnh + slicing. The terminal selects the random access resource that indicates SDT + RedCap, initiates a random access procedure for the feature combination SDT + RedCap, and records a first report. The first report includes indication information of the feature SDT + RedCap that triggers the random access procedure, and indication information of the feature SDT + RedCap corresponding to the selected random access resource.

For another example, a feature combination SDT + CovEnh + Slicing triggers random access, and the terminal device determines, based on the RACH resource set in the first configuration information, that one or more RACH features to which resources are applicable include RedCap, SDT + RedCap, CovEnh + RedCap, SDT + CovEnh, and CovEnh + slicing. The terminal device selects, based on the resource set and the RACH feature priorities, the random access resource corresponding to CovEnh + slicing, initiates a random access procedure for the feature combination CovEnh + slicing, and records a first report. The first report includes indication information of the feature combination SDT + CovEnh + Slicing that triggers the random access procedure, and indication information of the feature combination CovEnh + slicing corresponding to the selected random access resource.

The first report may further include the RACH feature priority information (for example, the RACH feature priorities configured by the network device are as follows: RedCap > Slice group1 > SDT > CovEnh).

It should be understood that because the first information includes indication information related to a RACH feature that triggers a random access procedure and/or the RACH feature priority information, the network device can further configure, based on the first information, an appropriate priority for a RACH feature that occurs at a high frequency, and allocate a corresponding resource to the RACH feature, avoiding a problem that the network device inappropriately allocates resources, and increasing a success rate of RACH.

Optionally, the first information further includes one or more of the following information: cell identity information of random access, frequency information of random access, time-frequency domain configuration information, signal quality measurement information, information indicating that signal quality measurement information meets a quality threshold, an amount of data to be transmitted in 2-step random access, configuration information of an uplink data channel in 2-step random access, and information about a beam over which a random access attempt is made.

According to the method shown in FIG. 5, the terminal device determines that at least one RACH feature meets the condition for triggering random access, determines a random access resource for the at least one random access feature based on the first configuration information, and initiates a random access procedure. The terminal device records a first report, where the first report includes first information related to the random access procedure. In this way, after the terminal device reports the first report to a network side, the network side can appropriately adjust, based on the first report, a random access resource configuration corresponding to the random access feature, increasing a success rate of performing random access by the terminal device for the random access feature.

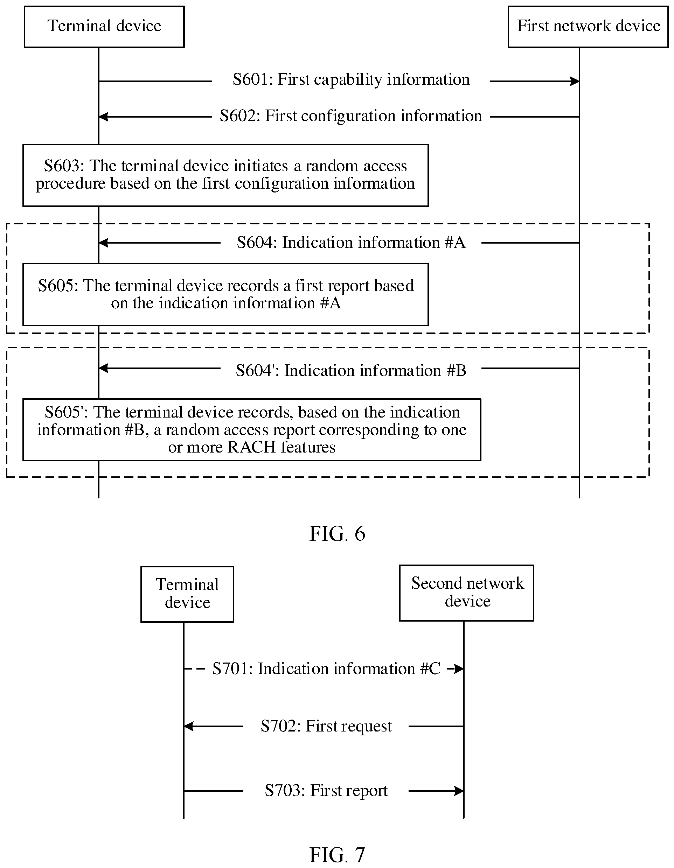

According to the method shown in FIG. 5, in a process in which the terminal device initiates, based on the first configuration information, a random access procedure for at least one random access feature that meets the trigger condition, and records a first report, another step may be further included. For example, FIG. 6 is a schematic flowchart of another information processing method according to an embodiment of this application. As shown in FIG. 6, the method further includes the following step.

S601: A terminal device sends first capability information to a first network device.

Correspondingly, the first network device receives the first capability information from the terminal device. The first capability information is similar to the UE capability information described in FIG. 4, and therefore is not described herein again.

The first capability information is used for determining whether the terminal device supports recording of a first report.

In another implementation, the first capability information is used for determining that the terminal device supports recording of a first report.

In the method shown in FIG. 6, the method further includes the following steps.

S602: The first network device sends first configuration information to the terminal device.

Correspondingly, the terminal device receives the first configuration information from the first network device.

Specifically, after the first network device receives the first capability information of the terminal device, the first network device determines that the terminal device can record the first report, and sends the first configuration information to the terminal device.

The first configuration information includes a RACH resource set used for a RACH feature.

Optionally, the RACH feature includes one or more of reduced capability terminal device, short packet transmission, coverage enhancement, or network slicing. For descriptions of the RACH features, refer to the foregoing related content.

S603: The terminal device initiates a random access procedure based on the first configuration information.

Specifically, after the terminal device receives the first configuration information from the first network device, when at least one RACH feature meets a condition for triggering random access, the terminal device selects a random access resource based on the first configuration information, and initiates a random access procedure.

It should be understood that step S602 and step S603 are respectively similar to step S510 and step S520 shown in FIG. 5, and therefore are not described herein again.

In an implementation, when the first network device sends indication information #A to the terminal device, where the indication information #A indicates whether the terminal device records the first report, the method shown in FIG. 6 further includes the following step.

S604: The first network device sends the indication information #A to the terminal device.

Correspondingly, the terminal device receives the indication information #A from the first network device.

In an example, the indication information #A indicates whether the terminal device records the first report. The indication information #A indicates that the terminal device records the first report, or the indication information #A indicates that the terminal device does not record the first report.

In another example, the indication information #A indicates that the terminal device records the first report. When the terminal device receives the indication information #A, the terminal device records the first report based on the indication information #A. When the terminal device does not receive the indication information #A, the terminal device does not record the first report.

In an example, the indication information #A includes a first threshold. The first threshold is a maximum quantity of random access reports recorded by the terminal device.

It should be understood that the random access reports may be RACH reports corresponding to all random access features, or RACH reports corresponding to some random access features, for example, a RACH report corresponding to a random access procedure related to a particular random access feature, or a RACH report corresponding to a random access procedure related to any one of several particular random access features.

In an example, the first threshold may alternatively indicate a maximum quantity of one or more RACH features stored by the terminal device.

When the indication information #A indicates that the terminal device records the first report, the method shown in FIG. 6 further includes the following step.

S605: The terminal device records the first report based on the indication information #A.

It should be understood that, when the terminal device determines, based on the indication information #A, that a quantity of recorded RACH reports is greater than or equal to the first threshold, the terminal device no longer records information related to a random access procedure. For example, the terminal no longer records a first report.

In an example, the first threshold may alternatively indicate a maximum quantity of one or more RACH features stored by the terminal device.

In another example, when the first network device sends indication information #B to the terminal device, where the indication information #B indicates whether the terminal device records a random access report corresponding to one or more RACH features, the method shown in FIG. 6 further includes the following step.

S604': The terminal device receives the indication information #B from the first network device.

Correspondingly, the first network device sends the indication information #B to the terminal device.

In an example, the indication information #B indicates whether the terminal device records a random access report corresponding to one or more particular RACH feature types, or the indication information #B indicates whether the terminal device performs recording for all RACH features. This is not limited in this application.

It should be understood that, when the indication information #B indicates whether the terminal device records a random access report corresponding to one or more particular RACH features, the following two cases are included: a first case in which the indication information #B indicates that the terminal device records a random access report corresponding to one or more particular RACH features, and a second case in which the indication information #B indicates that the terminal device does not record a random access report corresponding to one or more particular RACH features. In the first case, in a case of a plurality of particular random access features, a random access report corresponding to any one of a plurality of random access features may be recorded, or a random access report related to a plurality of particular random access feature combinations may be recorded.

In another example, the indication information #B may alternatively indicate that the terminal device records a random access report corresponding to one or more particular RACH features, or the indication information #B may alternatively indicate that the terminal device records random access reports corresponding to all RACH features. When the terminal device receives the indication information #B from the first network device, the terminal device records a corresponding random access report based on the indication information #B. When the terminal device does not receive the indication information #B from the first network device, the terminal device does not record a corresponding random access report.

For example, the indication information #B may also include the first threshold. Details are not described again.

For example, the first threshold may alternatively indicate a maximum quantity of one or more RACH features stored by the terminal device.

S605': The terminal device records, based on the indication information #B, a random access report corresponding to one or more RACH features.

In an implementation, when the indication information #B indicates whether UE records a related report for a random access procedure of one or more particular RACH features, the one or more particular RACH features belong to RACH features or RACH feature combinations supported by the terminal device. The terminal device determines, based on the indication information #B, whether a RACH feature or RACH feature combination for which a RACH procedure is initiated is a feature indicated in the indication information #B. If the RACH feature or RACH feature combination is a feature indicated in the indication information #B, the terminal device records a corresponding RACH report. If the RACH feature or RACH feature combination is not a feature indicated in the indication information #B, the terminal device does not record the RACH report. For example, if a RACH feature or RACH feature combination corresponding to a RACH procedure initiated by the terminal device belongs to the one or more particular RACH features indicated in the indication information #B, the terminal device may record a first report after receiving the indication information #B. For another example, if the indication information #B indicates that the UE may record a RACH report for all RACH features, the terminal device may directly record a first report without determining a type of a RACH feature that corresponds to an initiated RACH procedure.

It should be understood that the indication information #B indicates whether the terminal device records a RACH report for one or more particular RACH features.

Optionally, in a case in which the indication information #B indicates that the terminal device records a report related to a random access procedure, when the terminal device receives the indication information #B from the first network device, the terminal device records a RACH report for all RACH features based on the indication information #B and a current random access procedure; or when the terminal device does not receive the indication information #B, the terminal device does not record a RACH report.

It should be understood that the indication information #A or indication information #B that the first network device sends to the terminal device may be sent to the terminal device by using a common RRC message or a dedicated RRC message. A common RRC message may be a system message. A system message may be a SIB1. A dedicated RRC message may be an RRC reconfiguration message. The indication information #A or indication information #B may be alternatively sent to the terminal device by an operation, administration and maintenance (operation, administration and maintenance, OAM) device.

In addition to being carried in the indication information and sent to the terminal device by the first network device, the first threshold in the indication information #A or indication information #B may be determined in a manner of predefining, for example, being predefined in a communication protocol, or may be agreed upon through negotiation between the first network device and the terminal device.

According to the method shown in FIG. 6, the first network device indicates, by sending the indication information #A and/or the indication information #B to the terminal device, the terminal device to record a random access report. Content of a report specifically recorded by the terminal device may vary with content of indication information from the first network device. The terminal device records a corresponding report according to an indication from the first network device, and further sends the RACH report recorded according to the indication information to the first network device, helping a network side adjust a resource configuration based on the RACH report, and increasing a success rate of RACH performed by the terminal device for an RACH feature.

According to the methods shown in FIG. 5 and FIG. 6, the terminal device initiates the random access procedure based on the first configuration information, and records the first report. The following describes, in detail with reference to FIG. 7, a specific method in which the terminal device sends the first report to the first network device. FIG. 7 is a schematic flowchart of another information processing method according to this application. The first report is used by the first network device for appropriately adjusting a resource configuration. In the method shown in FIG. 7, an example is used, in which a second network device is a gNB. The method shown in FIG. 7 includes the following steps.

S701: A terminal device sends indication information #C to a second network device.

The indication information #C indicates availability of a first report recorded by the terminal device.

The second network device is a network device that provides service for the terminal device. Alternatively, the terminal device accesses the second network device and communicates with the second network device.

Optionally, the indication information #C indicates availability (availability) of the first report, that is, indicates whether the first report is available. The indication information #C may alternatively indicate a type of the first report. For example, the type of the first report may be a legacy RACH report or an application RACH report. An application RACH report means that the RACH report is a RACH report that is recorded for a random access procedure triggered by a RACH feature or a RACH feature combination, for example, a RACH report that is recorded for a random access procedure triggered by a feature RedCap.

It should be understood that the indication information #C may be included in an RRC message and sent to the second network device. The RRC message may be an RRC setup complete message, an RRC reconfiguration complete message, an RRC reestablishment complete message, or an RRC resume complete message. This is not limited in this application.

In an implementation, when a first network device is a gNB and is of the split architecture shown in FIG. 1, after a gNB-DU in the first network device detects that the terminal device completes a random access procedure, the gNB-DU in the first network device indicates availability of a first report and a type of the first report to a gNB-CU over an F1 interface, or the gNB-DU indicates a manner of retrieving the first report to the gNB-CU over the F1 interface.

It should be understood that, when the first network device is of the split architecture shown in FIG. 1, step S701 is an optional step, and the first network device can detect availability of the first report via the gNB-DU.

S702: The network device sends a first request to the terminal device.

Specifically, the second network device receives the indication information #C from the terminal device. The indication information #C indicates availability of the first report. Correspondingly, the terminal device receives the first request from the second network device.

Alternatively, after the gNB-DU in the first network device indicates availability of the first report to the gNB-CU over the F1 interface, the first network device sends a first request to the terminal device. The first request is used to request the first report.

S703: The terminal device sends the first report to the network device.

Correspondingly, the network device receives the first report from the terminal device.

Specifically, after receiving the first request from the first network device, the terminal device sends the first report to the first network device.

Alternatively, after receiving the first request from the second network device, the terminal device sends the first report to the second network device.

In an example, the first network device and the second network device are a same network device.

In an example, if the first network device and the second network device are different network devices, the second network device may send part or all of information in the RACH report to the first network device based on a cell identity corresponding to the first report. The second network device may also send information about the type of the first report to the first network device. The type of the first report may be a report type corresponding to 5G, 4th generation (4th Generation, 4G) connected to a 5G core network, 4G, or another system or standard. The report type may also be referred to as a report format. Information in reports corresponding to different standards is recorded in different formats, and therefore a network device that complies with a standard corresponding to a format of a report can parse the report.

The following describes how a first report is forwarded by using an example in which the second network device is referred to as a network device #1 and the first network device is referred to as a network device #0. For example, if there is an interface over which the network device #1 and the network device #0 can communicate directly, the network device #1 sends part or all of information in a first report to the network device #0 over an interface between base stations. The interface between the network device #1 and the network device #0 may be an X2 interface or an Xn interface. Specifically, the network device #1 may send part or all of the information in the first report to the network device #0 by using a failure indication (failure indication, rlf indication) message, a handover report (handover report) message, an access and mobility indication (access and mobility indication) message, or another message.

For another example, if the network device #1 and the network device #0 cannot communicate directly, the network device #1 may send part or all of information in a report to the network device #0 via a core network device. The network device #1 may also send information about a type of the report to the network device #0. For example, part or all of the information in the report is sent to the core network device over an interface between the base station and the core network device. Specifically, the network device #1 sends part or all of the information in the report to the core network device over an S1 interface or an NG interface, and the core network device forwards the information received from the network device #1 to the network device #0. Specifically, the network device #1 may send part or all of the information in the report to the network device #0 by using at least one of the following messages over the S1/NG interface: an uplink RAN configuration transfer (uplink RAN configuration transfer) message, a downlink RAN configuration transfer (downlink RAN configuration transfer) message, a base station configuration transfer (eNB configuration transfer) message, a core network device configuration transfer (MME configuration transfer) message, or another message.

According to the method shown in FIG. 7, after recording a first report, the terminal device sends availability of the first report to the second network device. Based on a first request from the second network device, the terminal device sends the first report to the second network device. The second network device sends part or all of information in the report to the first network device. After obtaining the first report, the first network device further adjusts information such as resource configurations and priorities of RACH features based on the first report, to adapt to resource control requirements in different network environments. As such, a success rate of random access performed by the terminal device for the random access features is increased, and quality of communication is improved.

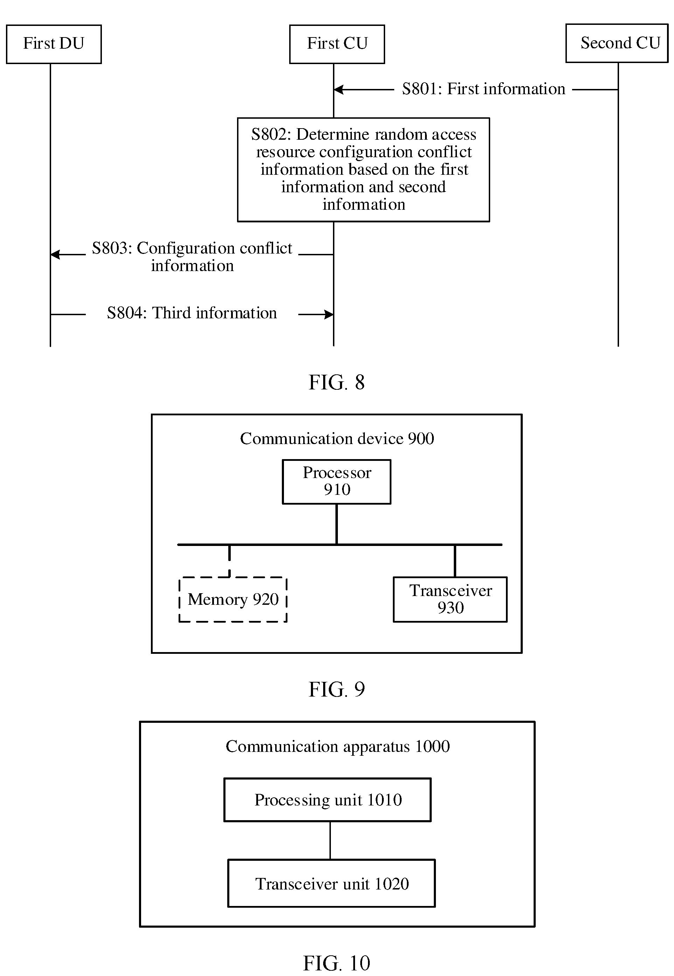

The terminal device receives the first configuration information from the first network device, where the first configuration information includes a RACH resource set used for a RACH feature. After the RACH resource set is considered in a random access procedure performed by the terminal device, the following conflicts may be accordingly caused: a conflict between legacy RACH configurations in cells, a conflict between RACH resource set configurations in cells, and a conflict between a legacy RACH configuration in one cell and a RACH resource set configuration in another cell. To resolve the resource conflict problem and reduce conflicts between random access resource configurations of cells, an embodiment of this application provides a method for resolving the resource conflict. FIG. 8 is a schematic flowchart of another information processing method according to an embodiment of this application.

S801: A first CU receives first information from a second CU.

The first information includes a RACH feature resource set and/or RACH feature priority information that are/is of the second CU.

It should be understood that the first CU belongs to a network device #2, and the second CU belongs to a network device #2 that is adjacent to the network device #3. The first CU and the second CU exchange information over an Xn interface.

It should also be understood that the first CU and the second CU, or the network device #2 and the network device #3, exchange RACH feature resource sets and/or RACH feature priority information, to determine whether a configuration conflict problem is resolved specifically with a first DU that belongs to a same network device as the first CU or with a second DU that belongs to a same network device as the second CU. For example, there is a configuration conflict between a random access resource configuration of a RACH feature CovEnh in the first CU and a random access resource configuration of a RACH feature SDT in the second CU. Usually, RACH feature priority configurations within a same cell are the same, and RACH feature priority information of adjacent network devices may also be exchanged between CUs. Assuming that a priority of the feature SDT is higher than a priority of the feature CovEnh, it can be determined that the first DU resolves the configuration conflict problem so that the RACH feature with a higher priority is not affected by the configuration conflict.

S802: The first CU determines random access resource configuration conflict information based on the first information and second information.

Specifically, after receiving the first information from the second CU, the first CU determines the random access resource configuration conflict information based on the first information and the second information. The second information includes a RACH feature resource set and/or RACH feature priority information that are/is of the first CU. For the RACH feature resource set, refer to the RACH resource set in the foregoing embodiments, and for the RACH feature priority information, refer to the priority information in the foregoing embodiments. Details are not described again.

If RACH resource sets and/or RACH feature priorities are inappropriately configured, a conflict between random access resource configurations in cells results. For example, the conflict between random access resource configurations in cells includes a conflict between random access resource configurations that correspond to beams in different cells. The beams in different cells are, for example, a beam in a cell serving the terminal device and a beam in a cell adjacent to the serving cell. In addition, the beams in different cells overlap in time and space.

The first CU determines, based on the RACH feature resource set and/or RACH feature priority information of the second CU included in the first information and the RACH feature resource set and/or RACH feature priority information of the first CU included in the second information, whether there is a random access resource configuration conflict between the first CU and the second CU.

In an example, the random access resource configuration conflict information includes one or more of the following: a conflict between legacy random access configurations, a conflict between RACH feature resource set configurations, and a conflict between a legacy RACH feature configuration and a RACH feature resource set configuration.

S803: The first CU sends the random access resource configuration conflict information to the first DU.

Correspondingly, the first DU receives the random access resource configuration conflict information from the first CU.

It should be understood that the first CU and the first DU exchange information over an F1 interface.

The first CU and the first DU correspond to each other and belong to a same network device. For example, the first CU and the first DU are located in a same base station.

S804: The first DU sends third information to the first CU.

Correspondingly, the first CU receives the third information from the first DU.

Specifically, after receiving the random access resource configuration conflict information from the first CU, the first DU adjusts the RACH feature resource set configuration information and/or the RACH feature priority information based on the configuration conflict information, to obtain the third information. The third information includes adjusted RACH feature resource set configuration information and/or adjusted RACH feature priority information. The first DU sends the third information to the first CU.

According to the method shown in FIG. 8, CUs in adjacent network devices exchange information to identify a configuration conflict and determine a possible solution to the configuration conflict, reducing RACH feature configuration conflicts between cells, increasing a success rate of performing a random access procedure by a terminal device, and improving quality of communication.

The foregoing describes, in detail with reference to FIG. 2 to FIG. 8, a communication method provided in embodiments of this application. The following describes, in detail with reference to FIG. 9 and FIG. 10, communication apparatuses provided in embodiments of this application.

With reference to FIG. 9 and FIG. 10, the following describes in detail communication apparatuses provided in embodiments of this application. It should be understood that descriptions of apparatus embodiments correspond to the descriptions of the method embodiments. Therefore, for content that is not described in detail, refer to the foregoing method embodiments. For brevity, a part of content is not described again.

In embodiments of this application, functional modules of a transmitter device or a receiver device may be obtained through division based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that in embodiments of this application, division into modules is an example, is merely division into logical functions, and may be other division during actual implementation. Descriptions are provided below by using an example in which each functional module is obtained through division based on each corresponding function.

FIG. 9 is a block diagram of an information transmission device 900 according to this application. Any device in any of the methods in FIG. 5 to FIG. 8, for example, the terminal device or the network device, can be implemented by the communication device shown in FIG. 9.

It should be understood that the information transmission device 900 may be a physical device, a component in a physical device (for example, an integrated circuit or a chip), or a functional module in a physical device.

As shown in FIG. 9, the communication device 900 includes one or more processors 913. Optionally, the processor 913 may invoke interfaces to implement receiving and sending functions. The interfaces may be logical interfaces or physical interfaces. This is not limited. For example, the interfaces may be transceiver circuits, input/output interfaces, or interface circuits. Transceiver circuits, input/output interfaces, or interface circuits that are configured to implement the receiving and sending functions may be separated, or may be integrated together. The transceiver circuits or the interface circuits may be configured to read and write code/data, or the transceiver circuits or the interface circuits may be configured to transmit or transfer signals.

Optionally, an interface may be implemented by a transceiver. Optionally, the information transmission device 900 may further include a transceiver 930. The transceiver 930 may also be referred to as a transceiver unit, a transceiver machine, a transceiver circuit, or the like, and is configured to implement receiving and sending functions.

Optionally, the communication device 900 may further include a memory 920. A specific location at which the memory 920 is deployed is not specifically limited in this embodiment of this application. The memory may be integrated into the processor, or may exist outside the processor. For a case in which the device 900 does not include a memory, the device 900 only needs to have a processing function. A memory may be deployed at another location (for example, a cloud system).

The processor 910, the memory 920, and the transceiver 930 communicate with each other through an internal connection path, to transfer a control signal and/or a data signal.

It can be understood that the device 900 may further include other apparatuses, such as an input apparatus, an output apparatus, and a battery, although they are not shown.

Optionally, in some embodiments, the memory 920 may store execution instructions that are used to perform the methods in embodiments of this application. The processor 910 may execute the instructions stored in the memory 920 and complete, in combination with other hardware (for example, the transceiver 930), the steps performed in the method shown below. For specific working processes and beneficial effects, refer to the descriptions in the foregoing method embodiments.

The methods disclosed in embodiments of this application may be applied to the processor 910, or may be implemented by the processor 910. The processor 910 may be an integrated circuit chip with a signal processing capability. In an implementation process, the steps in the methods may be performed by an integrated logic circuit in a form of hardware or instructions in a form of software in the processor. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor 910 may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed by a hardware decoding processor, or may be performed by hardware and software modules in a decoding processor. The software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in the memory. The processor reads the instructions in the memory, and completes the steps in the foregoing methods in combination with hardware of the processor.

It can be understood that the memory 920 may be a volatile memory or a nonvolatile memory, or may include both a volatile memory and a nonvolatile memory. The nonvolatile memory may be a read-only memory ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory RAM, used as an external cache. By using an example description instead of a restrictive description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the systems and methods described in this specification includes but is not limited to these memories and any memory of another proper type.

FIG. 10 is a block diagram of a communication apparatus 1000 according to this application. The apparatus 1000 includes a transceiver unit 1020. The transceiver unit 1020 may be configured to implement a corresponding communication function. The transceiver unit 1020 may also be referred to as a communication interface or a communication unit.

Optionally, the apparatus 1000 may further include a processing unit 1010. The processing unit 1010 may be configured to process data.

Optionally, a specific form of the apparatus 1000 configured to transmit information may be a general-purpose computer device or a chip in a general-purpose computer device. This is not limited in this embodiment of this application. As shown in FIG. 10, the apparatus includes the processing unit 1010 and the transceiver unit 1020.

Specifically, the apparatus 1000 may be any device in this application, and may implement a function that the device can implement. It should be understood that the apparatus 1000 may be a physical device, a component in a physical device (for example, an integrated circuit or a chip), or a functional module in a physical device.

In a possible design, the apparatus 1000 may be the terminal device (for example, the terminal device) in the foregoing method embodiments, or may be a chip configured to implement a function of the terminal device (for example, the terminal device) in the foregoing method embodiments.

Optionally, the apparatus 1000 further includes a storage unit. The storage unit may be configured to store instructions and/or data. The processing unit 1010 may read the instructions and/or the data in the storage unit, so that the apparatus implements actions of different terminal devices in the foregoing method embodiments, for example, actions of the control network element or the terminal device.

The apparatus 1000 may be configured to perform actions performed by the control network element or the terminal device in the foregoing method embodiments. In this case, the apparatus 1000 may be the control network element or the terminal device, or a component in the control network element or the terminal device. The transceiver unit 1020 is configured to perform receiving and sending related operations performed by the control network element or the terminal device in the foregoing method embodiments. The processing unit 1010 is configured to perform processing related operations performed by the control network element or the terminal device in the foregoing method embodiments.

It should be understood that the apparatus 1000 may be configured to perform actions performed by the control network element or the network device in the foregoing method embodiments. In this case, the transceiver unit 1020 in the apparatus 1000 may be implemented by a communication interface (for example, a transceiver or an input/output interface), for example, may correspond to the communication interface 930 shown in FIG. 9. The processing unit 1010 in the apparatus 1000 may be implemented by at least one processor, for example, may correspond to the processor 910 shown in FIG. 9.

Optionally, the apparatus 1000 may further include a storage unit. The storage unit may be configured to store instructions or data. The processing unit may invoke the instructions or the data stored in the storage unit, to implement a corresponding operation.

It should be understood that a specific process in which the units perform the foregoing corresponding steps is described in detail in the foregoing method embodiments, and for brevity, details are not described herein again.

It should be understood that a specific process in which the units perform the foregoing corresponding steps is described in detail in the foregoing method embodiments, and for brevity, details are not described herein again.

In addition, in this application, the communication apparatus 1000 is presented in a form of functional modules. The "module" herein may be an application-specific integrated circuit ASIC, a circuit, a processor that executes one or more software or firmware programs and a memory, an integrated logic circuit, and/or another component that can provide the foregoing functions. In a simple embodiment, a person skilled in the art may figure out that the apparatus 1000 may be in the form shown in FIG. 10. The processing unit 1010 may be implemented by the processor 910 shown in FIG. 9. Optionally, if the computer device shown in FIG. 9 includes the memory 900, the processing unit 1010 may be implemented by the processor 910 and the memory 900. The transceiver unit 1020 may be implemented by the transceiver 930 shown in FIG. 9. The transceiver 930 includes a receiving function and a sending function. Specifically, the processor implements the methods by executing a computer program stored in the memory. Optionally, when the apparatus 1000 is a chip, a function and/or an implementation process of the transceiver unit 1020 may be alternatively implemented by a pin, a circuit, or the like. Optionally, the memory may be a storage unit in the chip, for example, a register or a cache. Alternatively, the storage unit may be a storage unit that is in the apparatus and that is located outside the chip, for example, the memory 920 shown in FIG. 9, or may be a storage unit that is deployed in another system or device and is not in the computer device.

Various aspects or features in this application may be implemented as methods, apparatuses, or products using standard programming and/or engineering techniques. For example, a computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to various other media that can store, include, and/or carry instructions and/or data.

According to the methods provided in embodiments of this application, this application further provides a computer program product. The computer program product includes a computer program or a group of instructions. When the computer program or the group of instructions are run on a computer, the computer is enabled to perform the method in any one of the embodiments shown in FIG. 5 to FIG. 8.

According to the methods provided in embodiments of this application, this application further provides a computer-readable storage medium. The computer-readable medium stores a program or a group of instructions. When the program or the group of instructions are run on a computer, the computer is enabled to perform the method in any one of the embodiments shown in FIG. 5 to FIG. 8.

According to the methods provided in embodiments of this application, this application further provides a communication system. The communication system includes the foregoing apparatus or device.

Terms such as "component", "module", and "system" used in this specification are used to represent a computer-related entity, hardware, firmware, a combination of hardware and software, software, or software being executed. For example, a component may be, but is not limited to, a process that runs on a processor, a processor, an object, an executable file, a thread of execution, a program, and/or a computer. As illustrated by figures, a computing device and an application that runs on a computing device may both be a component. One or more components may reside within a process and/or a thread of execution, and a component may be located on a computer and/or distributed between two or more computers. In addition, these components may be executed from various computer-readable media that store various data structures. The components may communicate by using a local process and/or a remote process and based on signals with one or more data packets (for example, data from two components interacting with another component in a local system, a distributed system, and/or a network, such as the Internet interacting with another system by using signals).

It should be further understood that the term "and/or" in this specification describes merely associations between associated objects, indicating that three relationships may exist. For example, A and/or B may indicate the following three cases: Only A exists, both A and B exist, and only B exists. In addition, the character "/" in this specification usually indicates an "or" relationship between associated objects.

It should be further understood that numbers "first", "second", and the like are introduced in embodiments of this application only to distinguish between different objects, for example, to distinguish between different "information", "devices", or "units". Understanding of a specific object and a correspondence between different objects should be determined based on functions and internal logic of the specific object, and should not constitute any limitation on implementation processes of embodiments of this application.

The protocol in this application may be a communication protocol or a specification, for example, a 3GPP communication protocol.

A person of ordinary skill in the art may be aware that in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It can be clearly understood by a person skilled in the art that for a purpose of convenient and brief description, for specific work processes of the systems, apparatuses, and units described above, reference may be made to corresponding processes in the foregoing method embodiments. Details are not described herein again.

In the several embodiments provided in this application, it should be understood that the disclosed systems, apparatuses, and methods may be implemented in other manners. For example, the apparatus embodiments described above are merely examples. For example, division into the units is merely division into logical functions, and may be other division during actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may or may not be physical units, that is, may be located in a location, or may be distributed on a plurality of network units. Some or all of the units may be selected based on actual requirements to achieve the objectives of the solutions in embodiments.

In addition, functional units in embodiments of this application may be integrated in one processing unit, each of the units may exist alone physically, or two or more units may be integrated in one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or a compact disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. An information processing method, comprising:
receiving, by a terminal device, first configuration information from a first network device, wherein the first configuration information comprises a set of random access resources used for a random access feature;
when at least one random access feature meets a condition for triggering random access, initiating, by the terminal device, a random access procedure based on the first configuration information; and
recording, by the terminal device, a first report, wherein the first report comprises first information related to the random access procedure.

2. The method according to claim 1, wherein the first configuration information further comprises priority information of one or more random access features, and the one or more random access features comprise the at least one random access feature.

3. The method according to claim 1 or 2, wherein the initiating, by the terminal device, a random access procedure based on the first configuration information comprises:
determining, by the terminal device based on the resource set, a random access resource used for some or all random access features of the at least one random access feature; and
initiating, by the terminal device, the random access procedure for the some or all random access features.

4. The method according to any one of claims 1 to 3, wherein the first information comprises one or more of the following:
indication information of the at least one random access feature that triggers the random access procedure, indication information of a random access feature corresponding to an available random access resource that the terminal device selects from the resource set, and the priority information of the at least one random access feature.

5. The method according to any one of claims 1 to 4, wherein the method further comprises:
sending, by the terminal device, first indication information to a second network device, wherein the first indication information indicates availability of the first report.

6. The method according to any one of claims 1 to 5, wherein the method further comprises:
receiving, by the terminal device, a first request from the second network device, wherein the first request is used to request the first report; and
sending, by the terminal device, the first report to the second network device based on the first request.

7. The method according to any one of claims 1 to 6, wherein the method further comprises:
sending, by the terminal device, first capability information to the first network device, wherein the first capability information is used for determining whether the terminal device supports recording of the first report.

8. The method according to any one of claims 1 to 7, wherein the method further comprises:
receiving, by the terminal device, second indication information from the first network device, wherein the second indication information indicates whether the terminal device records a random access report corresponding to one or more random access features.

9. The method according to claim 8, wherein the random access feature comprises:
reduced capability terminal device, short packet transmission SDT, coverage enhancement, or network slicing.

10. The method according to any one of claims 1 to 7, wherein the method further comprises:
receiving, by the terminal device, third indication information from the first network device, wherein the third indication information indicates whether the terminal device records the first report.

11. The method according to any one of claims 8 to 10, wherein the second indication information or the third indication information comprises a first threshold, and the first threshold is a maximum quantity of random access reports recorded by the terminal device.

12. The method according to any one of claims 1 to 11, wherein the first information further comprises one or more of the following information:
cell identity information of random access, frequency information of random access, time-frequency domain configuration information, signal quality measurement information, information indicating that signal quality measurement information meets a quality threshold, an amount of data to be transmitted in 2-step random access, configuration information of an uplink data channel in 2-step random access, and information about a beam over which a random access attempt is made.

13. An information processing method, comprising:
determining, by a first network device, first configuration information, wherein the first configuration information comprises a set of random access resources used for a random access feature; and
sending, by the first network device, the first configuration information to a terminal device, wherein the first configuration information is used by the terminal device for initiating a random access procedure.

14. The method according to claim 13, wherein the first configuration information further comprises priority information of one or more random access features, and the one or more random access features comprise at least one random access feature.

15. The method according to claim 13 or 14, wherein the method further comprises:
receiving, by the first network device, first indication information from the terminal device, wherein the first indication information indicates availability of a first report, the first report comprises first information, and the first information is related to the random access procedure.

16. The method according to claim 15, wherein the first information comprises one or more of the following:
indication information of the at least one random access feature that triggers the random access procedure, indication information of a random access feature corresponding to an available random access resource that the terminal device selects from the resource set, and the priority information of the at least one random access feature.

17. The method according to any one of claims 13 to 16, wherein the method further comprises:
sending, by the first network device, first request information to the terminal device, wherein the first request information is used to obtain the first report; and
receiving, by the first network device, the first report from the terminal device.

18. The method according to any one of claims 13 to 17, wherein the method further comprises:
receiving, by the first network device, first capability information from the terminal device, wherein the first capability information is used for determining whether the terminal device supports recording of the first report.

19. The method according to any one of claims 13 to 18, wherein the method further comprises:
sending, by the first network device, second indication information to the terminal device, wherein the second indication information indicates whether the terminal device records a random access report corresponding to one or more random access features.

20. The method according to claim 19, wherein the random access feature comprises:
reduced capability terminal device, short packet transmission SDT, coverage enhancement, or network slicing.

21. The method according to any one of claims 13 to 18, wherein the method further comprises:
sending, by the first network device, third indication information to the terminal device, wherein the third indication information indicates whether the terminal device records the first report.

22. The method according to any one of claims 19 to 21, wherein the second indication information or the third indication information comprises a first threshold, and the first threshold is a maximum quantity of random access reports recorded by the terminal device.

23. The method according to any one of claims 15 to 22, wherein the first information further comprises one or more of the following:
cell identity information of random access, frequency information of random access, time-frequency domain configuration information, signal quality measurement information, information indicating that signal quality measurement information meets a quality threshold, an amount of data to be transmitted in 2-step random access, configuration information of an uplink data channel in 2-step random access, and information about a beam over which a random access attempt is made.

24. An information processing apparatus, wherein the apparatus comprises a unit that is configured to perform the method according to any one of claims 1 to 12, or a unit that is configured to perform the method according to any one of claims 13 to 23.

25. An information processing apparatus, comprising:
a processor and a memory, wherein
the processor is configured to execute a computer program stored in the memory, so that the communication apparatus performs the method according to any one of claims 1 to 12 or the method according to any one of claims 13 to 23.

26. A computer-readable storage medium, wherein the computer-readable storage medium stores a computer program, and when the computer program is run on a computer, the computer is enabled to perform the method according to any one of claims 1 to 12 or the method according to any one of claims 13 to 23.

27. A chip system, comprising a processor, wherein the processor is configured to invoke a computer program from a memory and run the computer program, so that an information processing configuration device with the chip system installed performs the method according to any one of claims 1 to 12 or the method according to any one of claims 13 to 23.
